## Europäisches Patentamt

## European Patent Office

## Office européen des brevets

(11) Veröffentlichungsnummer: **0 017 672
B1**

(12) **EUROPÄISCHE PATENTSCHRIFT**

(45) Veröffentlichungstag der Patentschrift:
27.04.83

(51) Int. Cl.³: **C 08 J 9/14, C 08 L 61/28,
E 04 B 1/74**

(21) Anmeldenummer: 79105217.8

(22) Anmeldetag: 17.12.79

(54) **Elastischer Schaumstoff auf Basis eines Melamin/Formaldehyd-Kondensationsproduktes und seine Verwendung.**

(30) Priorität: 17.04.79 DE 2915457

(43) Veröffentlichungstag der Anmeldung:
29.10.80 Patentblatt 80/22

(45) Bekanntmachung des Hinweises auf die Patenterteilung:
27.04.83 Patentblatt 83/17

(84) Benannte Vertragsstaaten:
BE CH DE FR GB IT NL SE

(56) Entgegenhaltungen:
DE-C-870 027
US-A-3 093 600

Die Akte enthält technische Angaben, die nach dem Eingang der Anmeldung eingereicht wurden und die nicht in dieser Patentschrift enthalten sind.

(73) Patentinhaber: BASF Aktiengesellschaft,
Carl-Bosch-Strasse 38, D-6700 Ludwigshafen (DE)

(72) Erfinder: Mahnke, Harald, Dr., Osloer Weg 48,
D-6700 Ludwigshafen (DE)
Erfinder: Woerner, Frank Peter, Dr., Am Altenbach 18,
D-6706 Wachenheim (DE)
Erfinder: Weber, Heinz, Dr., Am Wehrhaus 26,
D-6718 Gruenstadt 1 (DE)

# Elastischer Schaumstoff auf Basis eines Melamin/Formaldehyd-Kondensationsproduktes und seine Verwendung

Schaumstoffe werden für verschiedenartige Zwecke, insbesondere im Bauwesen zur Wärme- und Schalldämmung eingesetzt. Die gebräuchlichsten Schaumstoffe sind solche auf Basis von thermoplastischen Kunststoffen, vor allem von Styrolpolymerisaten. Diese haben eine hervorragende Dämmwirkung und weisen gute mechanische Eigenschaften auf, aufgrund des thermoplastischen Charakters von Polystyrol zeigen sie jedoch eine geringe Wärmeformbeständigkeit, die unter 100°C liegt. Darüber hinaus sind sie leicht entflammbar; eine Verbesserung des Brandverhaltens lässt sich nur durch Zusatz von halogenhaltigen Flammschutzmitteln erreichen, was jedoch wegen der Beeinträchtigung der Verarbeitungseigenschaften und der möglichen Bildung von Halogenwasserstoffen keine optimale Lösung darstellt. Ähnliches gilt für Polyurethanhartschäume, die zwar auch gute mechanische und Dämmeigenschaften haben, jedoch ein ungünstiges Brandverhalten aufweisen und im Brandfall toxische Rauchgase entwickeln. Auch duroplastische Harnstoffharze werden zu Schaumstoffen verarbeitet. Diese haben den Vorteil einer günstigen Rohstoffbasis; sie sind jedoch sehr spröde und rissanfällig und zeigen ebenfalls ein ungünstiges Brandverhalten.

Schaumstoffe auf Basis von Melamin/Formaldehyd-Kondensationsprodukten sind zwar schon verschiedentlich in der Patentliteratur beschrieben worden, sie wurden jedoch bisher im Bauwesen zur Wärme- und Schalldämmung noch nicht in technischem Massstab eingesetzt. Sie werden hergestellt durch Einrühren von Luft in eine wässerige Melaminharzlösung, welche einen Emulgator und ein Härtungsmittel enthält. Solche Schaumstoffe, wie sie z.B. in der DE-PS Nr. 870027 beschrieben werden, haben den schwerwiegenden Nachteil, dass sie sehr hart und spröde sind und bei der Handhabung leicht brechen bzw. bröseln. Nach der FR-PS Nr. 1073642 sollen Melaminharzschäume hergestellt werden können durch Erhitzen von pulverförmigem Harz unter Vakuum in einer Form. Man erhält jedoch mit diesem Verfahren keine brauchbaren elastischen Schaumstoffe. In der US-PS Nr. 3093600 sind Melaminharzschäume beschrieben, die durch Einbau von Triolen, beispielsweise Trimethylolpropan, eine verbesserte Elastizität und Rissfestigkeit erhalten sollen. Es zeigt sich aber, dass die Elastizität und vor allem die Wiedererholung beim Stauchen solcher Schaumstoffe für viele Anwendungszwecke nicht ausreicht. Ausserdem verschlechtert sich beim Einbau grösserer Mengen an Triolen das Brandverhalten der Schaumstoffe erheblich. In der US-PS Nr. 3063953 ist ein Verfahren zur Verbesserung der mechanischen Festigkeit, Elastizität und Weichheit von Aminoplastharzschäumen, vorzugsweise solchen auf Basis von Harnstoffharzen beschrieben. Mit diesem Verfahren kann man bei Melaminharzschäumen, die nach dem Stand der Technik hergestellt wurden, die genannten Eigenschaften zwar etwas, jedoch nicht entscheidend verbessern. Vor allem die Zugfestigkeit solcher Schaumstoffe ist viel zu gering.

Der Erfindung lag die Aufgabe zugrunde, Schaumstoffe auf Basis von Melamin/Formaldehyd-Kondensationsprodukten bereitzustellen, die bei der Anwendung als Dämmstoffe den Anforderungen genügen, die in der Bauindustrie an solche Materialien gestellt werden. Insbesondere sollen sie gute mechanische Eigenschaften aufweisen, d.h. elastisch, stabil und leicht handhabbar sein. Darüber hinaus sollen sie ein gutes Brandverhalten zeigen, d.h. nach DIN 4102 mindestens normalentflammbar, vorzugsweise aber schwerentflammbar sein.

Gegenstand der Erfindung sind demzufolge elastische offentellige Schaumstoffe auf Basis eines Melamin/Formaldehyd-Kondensationsproduktes, welches mindestens 50 Gew.%, vorzugsweise mindestens 80 Gew.% Melamin und Formaldehydeinheiten einkondensiert enthält und bis zu 50, vorzugsweise bis zu 20 Gew.%, andere amino-, amid-, oder carboxylgruppenhaltige Duroplastbildner einerseits und Aldehyde andererseits einkondensiert enthalten kann. Sie sind durch folgende Eigenschaften gekennzeichnet:

a) die Rohdichte nach DIN 53420 liegt zwischen 4 und 80, vorzugsweise zwischen 6 und 60, und insbesondere zwischen 8 und 40 $[g \cdot l^{-1}]$;

b) die Wärmeleitzahl nach DIN 52612 ist kleiner als 0,06, vorzugsweise kleiner als 0,05, und insbesondere kleiner als 0,04 $[W \cdot m^{-1} \cdot °K^{-1}]$;

c) die Stauchhärte nach DIN 53577 bei 60% Stauchung, dividiert durch die Rohdichte liegt unter 0,3, vorzugsweise unter 0,2 $[N \cdot cm^{-2}/g \cdot l^{-1}]$, wobei bei der Bestimmung der Stauchhärte bei 60% Stauchung eine Wiedererholung des Schaumstoffs auf mindestens 70%, vorzugsweise mindestens 80%, und insbesondere mindestens 90% seiner ursprünglichen Abmessung erfolgen muss;

d) der Elastizitätsmodul in Anlehnung an DIN 53423, dividiert durch die Rohdichte liegt unter 0,25, vorzugsweise unter 0,2, und insbesondere unter 0,15 $[N \cdot mm^{-2}/g \cdot l^{-1}]$;

e) der Biegeweg beim Bruch nach DIN 53423 ist grösser als 6, vorzugsweise grösser als 9, und insbesondere grösser als 12 [mm];

f) sie sind nach DIN 4102 mindestens normalentflammbar, vorzugsweise schwerentflammbar;

g) die Zugfestigkeit nach DIN 53571 beträgt vorzugsweise mindestens 0,07, insbesondere mindestens 0,1 $N \cdot mm^{-2}$.

Durch die Erfindung werden erstmals technisch brauchbare Schaumstoffe auf Basis von Melamin/Formaldehyd-Kondensationsprodukten für den Einsatz im Bauwesen bereitgestellt. Sie haben nicht nur hervorragende Wärmedämmeigenschaften aufgrund ihrer niedrigen Dichte und ihrer geringen Wärmeleitzahl; wegen ihrer Offenzelligkeit eignen sie sich auch gut zur Schalldämmung. Gegenüber allen anderen üblichen organischen Schaumkunststoffen haben sie den Vorteil, dass sie auch ohne Zusatz von Flammschutzmitteln nach DIN 4102 normalentflammbar, in den weitaus meisten Fällen sogar schwerentflammbar sind. Im Brandfall verkohlt der Schaumstoff ohne zu schmelzen und dabei abzutropfen; er verlöscht sofort, wenn man die Flamme entfernt. Da die Ausgangsstoffe für die Herstellung von Melaminharzen $CO_2$, $NH_3$ und $CH_3OH$ sind, hat man hier einen Schaumstoff, der unabhängig ist von Rohstoffen auf Erdölbasis.

Bei einer mikroskopischen Betrachtung der erfindungsgemässen Schaumstoffe zeigt es sich, dass das Schaumgerüst eine Vielzahl miteinander verbundener, dreidimensionalverzweigter Stege enthält (siehe Abbildung). Melaminharzschäume sind nur dann ausreichend elastisch, wenn die Stege folgende Bedingungen erfüllen:

1. Das mittlere Länge:Dickeverhältnis muss grösser als 10:1, vorzugsweise grösser als 12:1, und insbesondere grösser als 15:1 sein.

2. Die Dichte der Stege muss grösser als 1,10, vorzugsweise grösser als 1,20, und insbesondere grösser als 1,30 g/cm³ sein.

Zu kurze Stege (mit zu geringem 1:d-Verhältnis) erhält man, wenn der Härtungsvorgang zu früh einsetzt, bevor der Schäumvorgang im wesentlichen beendet ist. Eine zu niedrige Stegdichte deutet darauf hin, dass sich im Inneren der Stege kleine Hohlräume, Blasen, befinden, die von einer Sekundärschäumung herrühren. Eine solche Sekundärschäumung tritt ein, wenn der Wassergehalt des Melaminharzvorkondensats zu hoch war. In beiden Fällen werden spröde Schaumstoffe erhalten.

Das mittlere 1:d-Verhältnis wird mikroskopisch bestimmt, wobei die Steglänge und -dicke nach einem statistischen Auszählverfahren ermittelt werden. Als Steglänge ist der Abstand zwischen den Mittelpunkten zweier Knotenstellen und als Stegdicke die Dicke an der schmälsten Stelle eines Stegs, jeweils gemessen an der mikroskopischen Aufnahme, definiert. Zur Bestimmung der Dichte der Schaumstoffstege wird der Schaumstoff in eine geeignete Flüssigkeit, z.B. Isopropanol, gelegt, mit der er sich auf Grund seiner Offenzelligkeit vollsaugt. Die Dichte der Stege wird dann nach dem archimedischen Prinzip bestimmt.

Bei den erfindungsgemässen Schaumstoffen handelt es sich um Melamin/Formaldehyd-Kondensationsprodukte, die neben Melamin bis zu 50, vorzugsweise bis zu 20 Gew.% anderer Duroplastbildner, und neben Formaldehyd bis zu 50, vorzugsweise bis zu 20 Gew.% anderer Aldehyde einkondensiert enthalten können. Besonders bevorzugt ist ein unmodifiziertes Melamin/Formaldehyd-Kondensationsprodukt. Als Duroplastbildner kommen beispielsweise in Frage: alkylsubstituiertes Melamin, Harnstoff, Urethane, Carbonsäureamide, Dicyandiamid, Guanidin, Sulfurylamid, Sulfonsäureamide, aliphatische Amine, Phenol und dessen Derivaten. Als Aldehyde können z.B. Acetaldehyd, Trimethylolacetaldehyd, Acrolein, Benzaldehyd, Furfurol, Glyoxal, Phthalaldehyd und Terephthalaldehyd eingesetzt werden. Weitere Einzelheiten über Melamin/Formaldehyd-Kondensationsprodukte finden sich in Houben-Weyl, „Methoden der organischen Chemie", Band 14/2, 1963, S. 319 bis 402. Das Molverhältnis Duroplastbildner: Aldehyd kann in weiten Grenzen zwischen 1:1,5 und 1:4,5 schwanken; im Falle von Melamin/Formaldehyd-Kondensaten liegt es vorzugsweise zwischen 1:2,5 und 1:3,5.

Die erfindungsgemässen Schaumstoffe können bis zu 50, vorzugsweise bis zu 20 Gew.% üblicher Zusatzstoffe enthalten. In Frage kommen beispielsweise faser- oder pulverförmige anorganische Verstärkungsmittel oder Füllstoffe, wie Glasfasern, Metallpulver, Metalloxide, Metallsalze oder Silikate, z.B. Talkum, Kaolin, Quarz, Schwerspat oder Kreide; ferner Pigmente und Farbstoffe; Flammschutzmittel, wie halogen- oder phosphorhaltige organische Verbindungen; Weichmacher, wie Triole, z.B. Trimethylolpropan, oder Acrylate; Hydrophobierungsmittel, wie z.B. Alkylphenole Mittel zur Herabsetzung der Brandgastoxizität, wie z.B. Verbindungen des dreiwertigen Bors, des zweiwertigen Kupfers und des dreiwertigen Eisens oder zur Förderung der Verkohlung, wie z.B. Saccharose. Es ist aber auf jeden Fall bevorzugt, ohne derartige Zusatzstoffe auszukommen. Es ist bekannt, dass z.B. Weichmacher das Brandverhalten verschlechtern; sie werden daher nur in solchen Fällen zugesetzt, wo besonderer Wert auf sehr flexible Schäume gelegt wird. Hierbei kann es dann notwendig werden, Flammschutzmittel zuzusetzen, auf die im Normalfall, vor allem bei unmodifizierten Melamin/Formaldehyd-Kondensaten verzichtet werden kann. Da die Schaumstoffe offenporig sind und deshalb Wasser aufnehmen können, kann es für manche Anwendungszwecke notwendig sein, Hydrophobierungsmittel in Mengen von 0,2 bis 5 Gew.% zuzusetzen.

Die erfindungsgemässen Schaumstoffe zeichnen sich durch ihre extrem niedrige Rohdichte aus, die auf bis zu 4 [g·l⁻¹] heruntergehen kann. Dies hat zur Folge, dass die Schaumstoffe von den Einsatzstoffkosten her sehr billig sind. Höhere Dichten bis zu 80 [g·l⁻¹] sind nur für besondere Anwendungszwecke, z.B. bei Verbundmaterialien interessant. Vorzugsweise liegt die Rohdichte zwischen 6 und 60, insbesondere zwischen 8 und 40 [g·l⁻¹]. Die Wärmeleitzahl bei 10°C ist kleiner als 0,06, vorzugsweise kleiner als 0,05 und insbesondere kleiner als 0,04 [W·m⁻¹·°K⁻¹]. Sie ist damit günstiger als bei Polyurethanweichschäumen und liegt in der Grössenordnung von Polystyrolschaumstoffen.

Die günstigen mechanischen Eigenschaften werden durch die Stauchhärte, den Elastizitätsmodul, den Biegeweg beim Bruch und die Zugfestigkeit ausgedrückt. Der Elastizitätsmodul wird in Anlehnung an DIN 53423 bestimmt, wobei die Prüfgeschwindigkeit 5 [mm·min⁻¹] beträgt und die Messung bis zu einer maximalen Durchbiegung von 0,5 mm durchgeführt wird. Dabei ändern sich die Stauchhärte und der Elastizitätsmodul in etwa proportional zur Dichte, so dass zur Charakterisierung der Quotient Stauchhärte durch Rohdichte bzw. Elastizitätsmodul durch Rohdichte herangezogen wird. Ein anwendungstechnisch sehr wichtiges Merkmal der erfindungsgemässen Schaumstoffe ist die Wiedererholung bei der Stauchung. Sie wird bei der Bestimmung der Stauchhärte gemessen und beträgt bei 60% Stauchung mindestens 70%, vorzugsweise mindestens 80% und insbesondere mindestens 90%. Es fällt dabei auf, dass bei frisch hergestelltem Schaumstoff die erste Stauchung sich deutlich von den nachfolgenden abhebt: hier ist eine etwas grössere Kraft zum Stauchen erforderlich, was offenbar darauf zurückzuführen ist, dass Reste von harten Bereichen im Zellgerüst zerstört werden. Durch Walken der Schaumstoffe werden die harten Bereiche zerstört. Eine ebenfalls sehr wichtige Eigenschaft ist das Brandverhalten. Die Schaumstoffe sind nach DIN 4102 mindestens normalentflammbar, vorzugsweise aber schwer entflammbar. Die Normalentflammbarkeit beschränkt sich auf Ausnahmefälle, in denen z.B. Weichmacher zugesetzt oder modifizierende Aminoplastbildner, z.B. Harnstoff einkondensiert wurden.

Die erfindungsgemässen Schaumstoffe können hergestellt werden durch Verschäumen einer wässerigen Lösung oder Dispersion, welche ein Melamin/Formaldehyd-Vorkondensat, einen Emulgator, ein Treibmittel und einen Härter sowie gegebenenfalls übliche Zusatzstoffe enthält, und anschliessendes Aushärten des Schaumes. Es hat sich gezeigt, dass besonders elastische Schaumstoffe dann erhalten werden, wenn man verhältnismässig hochkonzentrierte, vorzugsweise über 68 gewichtsprozentige und insbesondere über 72 gewichtsprozentige Lösungen oder Dispersionen einsetzt (wobei sich die Konzentrationen auf die Mischung Harz und Wasser ohne Zusatzstoffe beziehen), und wenn man unter solchen Bedingungen verschäumt, dass zunächst nur ein geringer Viskositätsanstieg erfolgt und der Härtungsvorgang unter starker Viskositätserhöhung erst dann einsetzt, wenn der Schäumvorgang weitgehend beendet ist.

Als Emulgatoren kommen die üblichen nichtionogenen, anionenaktiven oder kationenaktiven organischen Verbindungen mit langkettigen Alkylresten in Frage. Als Treibmittel können flüchtige organische Verbindungen, wie Kohlenwasserstoffe oder Halogenkohlenwasserstoffe verwendet werden. Diese Treibmittel werden in der wässerigen Lösung oder Dispersion gleichmässig verteilt; beim Erhitzen verdampfen sie und bewirken das Aufschäumen. Man kann auch Gase unter Druck in die wässerige Lösung oder Dispersion einpressen und das Verschäumen durch Entspannen herbeiführen. Schliesslich ist es auch möglich, chemische Verbindungen, die unter Gasbildung reagieren oder sich zersetzen, einzumischen und die Reaktion bzw. Zersetzung durch Erhitzen hervorzurufen. Es werden die üblichen Härter verwendet, die bei Reaktionsbedingungen Protonen abspalten, welche die Weiterkondensation des Melaminharzes katalysieren. In Frage kommen anorganische und organische Säuren, latente Härter sowie Lewis-Säuren.

Die Schaumstoffe können als Platten oder Bahnen mit einer Dicke bis zu etwa 50 cm hergestellt werden oder als Schaumfolien mit einer Dicke von wenigen Millimetern. Bei diskontinuierlicher Herstellungsweise können auch Formteile erhalten werden. Die Schaumstoffe können ein- oder beidseitig mit Deckschichten versehen oder kaschiert werden, z.B. mit Papier, Pappe, Glasvlies, Holz, Gipsplatten, Metallbleche oder -folien, Kunststofffolien, die gegebenenfalls auch geschäumt sein können.

Das Hauptanwendungsgebiet der erfindungsgemässen Schaumstoffe ist die Wärme- und Schalldämmung von Gebäuden und Gebäudeteilen, insbesondere von Zwischenwänden, aber auch von Dächern, Fassaden, Türen und Fussböden; weiterhin die Wärme- und Schalldämmung von Fahrzeugen und Flugzeugen sowie die Tieftemperaturisolierung, z.B. von Kühlhäusern, Öltanks und Behälter für Flüssiggas. Weitere Anwendungsgebiete sind die Verwendung als isolierende Wandverkleidung, als isolierendes und stossdämmendes Verpackungsmaterial sowie als Verbandsmaterial und wegen der schwammartigen Struktur auch als Reinigungsmaterial. Die Schaumstoffe sind auch als Trägermaterial für Pflanzensamen geeignet, z.B. für Grassamen, der darin fixiert wird. Als Rollenware lassen sie sich gut verlegen. Flocken der erfindungsgemässen Schaumstoffe sind zur Auflockerung schwerer Böden, als feuchtigkeitsregulierendes Mittel und als Trägermaterial für Düngemittel einsetzbar.

Die in den Beispielen genannten Teile und Prozente beziehen sich auf das Gewicht, die Prozentangaben für Emulgator, Härter und Treibmittel sind immer auf das Gewicht des wasserfreien Melaminharzes bezogen.

*Beispiel 1*

In einem offenen Gefäss wird ein sprühgetrocknetes Melamin/Formaldehyd-Vorkondensat (Molverhältnis 1:3, Molekulargewicht etwa 500) zu einer wässerigen Lösung mit 3% Ameisensäure und 1,5% des Natriumsalzes eines Gemisches von Alkylsulfonaten mit 12 bis 18 C-Atomen im Alkylrest (Emulgator K 30 der Fa. Bayer AG), wobei die Prozentzahlen auf das Melaminharz bezogen sind, gegeben. Die Konzentration des Harzes, bezogen auf die Mischung aus Harz und Wasser, betrug 74%. Die Mischung wurde kräftig gerührt, dann wurden 20% Pentan zugegeben. Es wurde so lange (etwa 3 min lang) weitergerührt, bis eine homogene Dispersion entstand. Diese wurde auf ein teflonisiertes Glasgewebe als Trägermaterial aufgerakelt und in einem Trockenschrank, in dem eine Lufttemperatur von 150°C herrschte, aufgeschäumt und gehärtet. Dabei stellte sich als Massetemperatur im Schaum die Siedetemperatur des Pentans ein, die unter diesen Bedingungen bei 37,0°C liegt. Nach 7 bis 8 min war die maximale Steighöhe des Schaums erreicht. Der Schaum wurde noch weitere 10 min bei 150°C im Trockenschrank belassen; anschliessend wurde er 30 min lang bei 180°C getempert. Eigenschaften:s. Tabelle 1.

*Beispiel 2*

Es wurde gearbeitet wie in Beispiel 1, wobei aber statt 20% nur 13% Pentan eingesetzt wurden.

*Beispiel 3*

Es wurde gearbeitet wie in Beispiel 1, wobei als Säure 3% Schwefelsäure, als Emulgator 1,5% Natriumdodecylbenzolsulfonat und als Treibmittel 28% Trichlortrifluoräthan eingesetzt wurden. Die Harzkonzentration betrug 76%. Die Massetemperatur beim Schäumen lag bei 47°C. Der Schaum wurde nicht getempert.

*Beispiel 4*

Es wurde gearbeitet wie in Beispiel 1, wobei 6% Phosphorsäure, 1,5% Natriumlaurylsulfonat und 12% Pentan verwendet wurden. Es wurde ein Melaminharz eingesetzt, in dem das Molverhältnis Melamin:Formaldehyd 1:3,5 betrug. Die Harzkonzentration war 74%. Der Schaum wurde nicht getempert.

*Beispiel 5*

In einem offenen Gefäss wurden zu einer Lösung eines Melaminharzes 2,8% Ameisensäure und 1,4% des Alkylsulfonats aus Beispiel 1, bezogen auf das Harz, zugesetzt. Die Konzentration des Harzes, bezogen auf die Mischung aus Harz und Wasser, betrug 75,5%. Unter kräftigem Rühren wurden 20% Pentan zugegeben. Das Schäumen, Aushärten und Tempern erfolgte wie in Beispiel 1.

*Beispiel 6*

Es wurde gearbeitet wie in Beispiel 5, wobei ein Harz mit einem Molverhältnis Melamin:Formaldehyd von 1:2,5 eingesetzt wurde. Die Konzentration des Harzes betrug 76%. Als Härter wurden 0,20% Ameisensäure, als Emulgator 3% des Alkylsulfonats aus Beispiel 1 zusammen mit 0,3% eines niedrig äthoxylierten gesättigten Fettalkohols und als Treibmittel 23% n-Hexan verwendet. Die Massetemperatur beim Schäumen betrug 69,0°C. Der Schaum wurde wie in Beispiel 1 getempert.

*Beispiel 7*

Auf ein kontinuierlich laufendes Metallband wurde die homogene Mischung des Beispiels 1 aufgetragen. Das Band lief mit einer Geschwindigkeit von 0,4 [m·min⁻¹]. Es war auf etwa 130°C beheizt. Die Mischung wurde auf dem Band mit Hilfe eines Rakels auf eine Schichtdicke von etwa 2 mm gleichmässig verteilt. In einem mit 150°C heisser Luft beheizten Schäumkanal wurde die Mischung verschäumt, wobei sich eine Massetemperatur von 37,0°C einstellte. Nach etwa 4½ min waren 80% der endgültigen Steighöhe des Schaums und nach etwa 6 min war die endgültige Schaumdicke von 15 cm erreicht. Anschliessend wurde der Schaum weitere 7 min lang durch den Schäumkanal geführt, wobei die Massetemperatur auf etwa 98°C anstieg. Der Schaumstoff wurde noch 15 min lang bei einer Massetemperatur von etwa 170°C getempert und anschliessend besäumt.

*Beispiel 8*

Es wurde wie in Beispiel 6 gearbeitet, wobei ein Harz mit einem Molverhältnis Melamin:Formaldehyd von 1:2,0 eingesetzt wurde. Die Konzentration des Harzes betrug 80%. Als Härter wurden 2,5% Ameisensäure, als Emulgator ein Gemisch aus 0,6% diisobutylnaphthalinsulfonsaures Natrium und 1,6% eines niedrig äthoxylierten gesättigten Fettalkohols und als Treibmittel 16% Pentan verwendet.

*Beispiel 9*

Es wurde wie in Beispiel 1 gearbeitet, wobei als Säure 1,8% Ameisensäure und als Emulgator 2,2% Natriumdodecylbenzolsulfonat eingesetzt wurden. Die Temperung wurde bei 190°C durchgeführt.

Tabelle

| Beispiel | Rohdichte [g·l⁻¹] | Wärmeleitzahl [W·m⁻¹°K⁻¹] | Stauchhärte [N·cm⁻²] | Stauchhärte / Rohdichte | Wiedererholung (%) |
|---|---|---|---|---|---|
| 1 | 13 | 0,0325 | 1,3 | 0,10 | >90 |
| 2 | 20 | 0,032 | 3,0 | 0,15 | >90 |
| 3 | 30 | 0,033 | 5,5 | 0,18 | >90 |
| 4 | 28 | 0,033 | 5,0 | 0,18 | >90 |
| 5 | 13 | 0,034 | 1,2 | 0,09 | >90 |
| 6 | 14 | 0,034 | 1,3 | 0,09 | >90 |
| 7 | 12 | 0,032 | 1,2 | 0,10 | >90 |
| 8 | 17 | 0,034 | 1,3 | 0,08 | >90 |
| 9 | 12 | 0,036 | 2,2 | 0,18 | >90 |

Tabelle *(Fortsetzung)*

| Beispiel | Elastizitätsmodul [N·mm⁻²] | E-Modul / Rohdichte | Biegeweg [mm] | Zugfestigkeit [N·mm⁻²] | Brandverhalten |
|---|---|---|---|---|---|
| 1 | <1,0 | 0,08 | >20 | 0,12 | schwerentflammbar |
| 2 | 2,0 | 0,10 | 15 | 0,12 | schwerentflammbar |
| 3 | 3,5 | 0,12 | 11 | 0,12 | schwerentflammbar |
| 4 | 3,0 | 0,11 | >12 | 0,10 | schwerentflammbar |
| 5 | <1,0 | 0,08 | >20 | 0,11 | schwerentflammbar |
| 6 | 1,0 | 0,07 | >20 | 0,12 | schwerentflammbar |
| 7 | <1,0 | 0,085 | 23 | 0,13 | schwerentflammbar |
| 8 | 2,5 | 0,15 | 10 | 0,07 | schwerentflammbar |
| 9 | 1,0 | 0,085 | 20 | 0,07 | schwerentflammbar |

Tabelle *(Fortsetzung)*

| Beispiel | Steglänge / Stegdicke | Stegdichte [g·cm⁻³] |
|---|---|---|
| 1 | >15 | >1,3 |
| 2 | >10 | >1,3 |
| 3 | >10 | >1,3 |
| 4 | >10 | >1,3 |
| 5 | >12 | >1,3 |
| 6 | >12 | >1,3 |
| 7 | >15 | >1,3 |
| 8 | >10 | >1,3 |
| 9 | >25 | >1,3 |

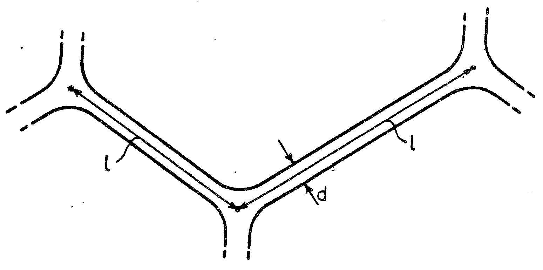

## Patentansprüche

1. Elastische, offenzellige Schaumstoffe auf Basis eines Melamin/Formaldehyd-Kondensationsproduktes, welches mindestens 50 Gew.% Melamin und Formaldehydeinheiten einkondensiert enthält, und bis zu 50 Gew.% andere amino-, amid-, hydroxyl- oder carboxylgruppenhaltige Duroplastbildner einerseits und Aldehyde andererseits einkondensiert enthalten kann, gekennzeichnet durch folgende Eigenschaften:
a) die Rohdichte nach DIN 53 420 liegt zwischen 4 und 80 [g·l⁻¹];
b) die Wärmeleitzahl nach DIN 52 612 ist kleiner als 0,06 [W·m⁻¹·°K⁻¹];
c) die Stauchhärte nach DIN 53 577 bei 60% Stauchung, dividiert durch die Rohdichte liegt unter 0,30 [N·cm⁻²/g·l⁻¹], wobei bei der Bestimmung der Stauchhärte bei 60% Stauchung eine Wiedererholung des Schaumstoffs auf mindestens 70% seiner ursprünglichen Abmessung erfolgen muss;
d) der Elastizitätsmodul in Anlehnung an DIN 53 432, dividiert durch die Rohdichte liegt unter 0,25 [N·mm⁻²/g·l⁻¹];
e) der Biegeweg beim Bruch nach DIN 53 423 ist grösser als 6 [mm];
f) sie sind nach DIN 4102 mindestens normalentflammbar.

2. Elastischer, offenzelliger Schaumstoff nach Anspruch 1, dadurch gekennzeichnet, dass er bis zu 50 Gew.% Zusatzstoffe, wie faser- oder pulverförmige anorganische Verstärkungsmittel oder Füllstoffe, Pigmente, Farbstoffe, Flammschutzmittel, Weichmacher, Hydrophobierungsmittel oder Mittel zur Herabsetzung der Brandgastoxizität oder zur Förderung der Verkohlung enthält.

3. Verwendung der Schaumstoffe nach den Ansprüchen 1 und 2 zur Wärme- und Schalldämmung im Bauwesen.

## Claims

1. Resilient open-celled foams based on a melamine/formaldehyde condensate which contains not less than 50% by weight of melamine and formaldehyde as condensed units and up to 50% by weight of other compounds containing amino, amide, hydroxyl or carboxyl groups and capable of forming thermosetting resins, and aldehydes which react therewith to form such resins, as cocondensed units, which foams have the following properties:
a) the bulk density, measured according to DIN 53 420, is from 4 to 80 [g·l⁻¹];
b) the heat conductivity, measured according to DIN 52 612, is less than 0.06 [W·m⁻¹·°K⁻¹];
c) the compressive strength, measured according to DIN 53 577 at 60% compression, divided by the bulk density, is less than 0.30 [N·cm⁻²/g·l⁻¹], and in determining the compressive strength at 60% compression, the foam must recover to not less than 70% of its original height;
d) the modulus of elasticity, measured by a method similar to DIN 53 423, divided by the bulk density, is less than 0.25 [N·mm⁻²/g·l⁻¹];
e) the deflection on break, measured acording to DIN 53 423, is greater than 6 [mm], and
f) the foams are of not more than normal flammability, when assessed according to DIN 4102.

2. A resilient open-celled foam as claimed in claim 1, containing up to 50% by weight of additives such as fibrous or pulverulent inorganic reinforcing agents or fillers, pigments, dyes, flame retardants, plasticizers, water-repellents and agents which lower the toxicity of combustion fumes or promote carbonization.

3. The use of the foams as claimed in claims 1 and 2 for heat and sound insulation in the construction industry.

## Revendications

1. Mousses élastiques à pores ouverts à base d'un produit de condensation mélamine/formaldéhyde, dans lequel sont polymérisés au moins 50% en poids d'unités formaldéhyde et mélamine et dans lequel peuvent être condensés jusqu'à 50% en poids d'autres aldéhydes et d'autres précurseurs de Duroplast à groupes amino, amide, hydroxyle ou carboxyle, caractérisées en ce qu'elles possèdent les propriétés suivantes:
a) une densité apparente selon la norme DIN 53420 comprise entre 4 et 80 $[g \cdot l^{-1}]$;
b) un coefficient de conductivité thermique selon la norme DIN 52612 inférieur à 0,06 $[W \cdot m^{-1} \cdot °K^{-1}]$;
c) une résistance à l'écrasement selon la norme DIN 53577, divisée par la densité apparente, inférieure à 0,30 $[N \cdot cm^{-2}/g \cdot l^{-1}]$ sous une compression de 60% avec un retour de la mousse à au moins 70% de sa dimension initiale après cette détermination de la résistance à l'écrasement sous une compression de 60%;
d) un module d'élasticité selon la norme DIN 53423, divisé par la densité apparente, inférieur à 0,25 $[N \cdot mm^{-2}/g \cdot l^{-1}]$;
e) une longueur de fléchissement à la rupture selon la norme DIN 53423 supérieure à 6 [mm], et
f) une inflammabilité au moins normale selon la norme DIN 4102.

2. Mousse élastique à pores ouverts suivant la revendication 1, caractérisée en ce qu'elle contient jusqu'à 50% en poids d'autres additifs tels que des matières de renforcement ou de charge inorganiques fibreuses ou pulvérulentes, des pigments, des colorants, des substances ignifugeantes, des plastifiants, des substances qui rendent hydrophobes, des substances réduisant la toxicité des gaz de combustion ou favorisant le charbonnement.

3. Utilisation des mousses suivant l'une des revendications 1 ou 2 pour l'isolation thermique et acoustique de constructions.